# EUROPEAN PATENT SPECIFICATION

(11) **EP 2 282 074 B1**
(45) Date of publication and mention of the grant of the patent: **02.11.2011**
(21) Application number: 10171569.6
(22) Date of filing: 02.08.2010
(51) Int. Cl.: F16D 65/14, B23K 20/12

(54) **Disk brake**
Scheibenbremse
Frein à disque

(30) Priority: 03.08.2009 JP 2009180822
(43) Date of publication of application: 09.02.2011
(73) Proprietor: Hitachi Automotive Systems, Ltd., Hitachinaka-shi Ibaraki 312-8503 (JP)
(72) Inventor: Nanri, Keisuke, Kawasaki-shi Kanagawa 210-0011 (JP); Nagasawa, Junichi, Kawasaki-shi Kanagawa 210-0011 (JP); Kobayashi, Yuichi, KAwasaki-shi Kanagawa 210-0011 (JP); Matsui, Yoshimasa, Kawasaki-shi Kanagawa 210-0011 (JP)
(74) Representative: HOFFMANN EITLE

(56) References cited:
- EP-A1- 1 688 207
- JP-A- 2007 225 058

## Description

The present invention relates to a disk brake for use in braking of a vehicle.

There is known a disk brake formed by welding a cover member to a bottom of a bore of a cylinder by friction stir welding (FSW) (for example, refer to Japanese Patent Application Public Disclosure No. 2007-225058).

In a disk brake formed by friction stir welding as mentioned above, it is important to stabilize the welding quality.

Therefore, an object of the present invention is to provide a disk brake capable of stabilizing the welding quality of friction stir welding.

To achieve the forgoing and other objects, the present invention provides a disk brak having a greater thickness at an inner side of a cylinder main body in a disk radial direction than at an outer side of the cylinder main body in the disk radial direction.

According to the present invention, it is possible to stabilize the welding quality of friction stir welding.
Fig. 1 is a top view illustrating a disk brake according to a first embodiment of the present invention;
Fig. 2 is a sectional side view illustrating the disk brake according to the first embodiment of the present invention;
Fig. 3 is a bottom view illustrating a caliper body main part of the disk brake according to the first embodiment of the present invention;
Fig. 4 is a sectional view taken along line A1-A1 shown in Fig. 3, which illustrates the caliper body main part of the disk brake according to the first embodiment of the present invention;
Fig. 5 is a sectional view taken along line B1-B1 shown in Fig. 4, which illustrates the caliper body main part of the disk brake according to the first embodiment of the present invention;
Fig. 6 is a bottom view illustrating a caliper body main part of a disk brake according to a second embodiment of the present invention;
Fig. 7 is a sectional view taken along line A2-A2 shown in Fig. 6, which illustrates the caliper body main part of the disk brake according to the second embodiment of the present invention;
Fig. 8 a sectional view taken along line B2-B2 shown in Fig. 7, which illustrates the caliper body main part of the disk brake according to the second embodiment of the present invention; and
Fig. 9 is a characteristic line diagram illustrating the relationship among a thickness ratio B/A, a deformation amount of thickness B, and a thickness increase amount of a cylinder of the disk brake according to the second embodiment of the present invention.

Hereinafter, embodiments of the present invention will be described with reference to the accompanying drawings.

### "First Embodiment"

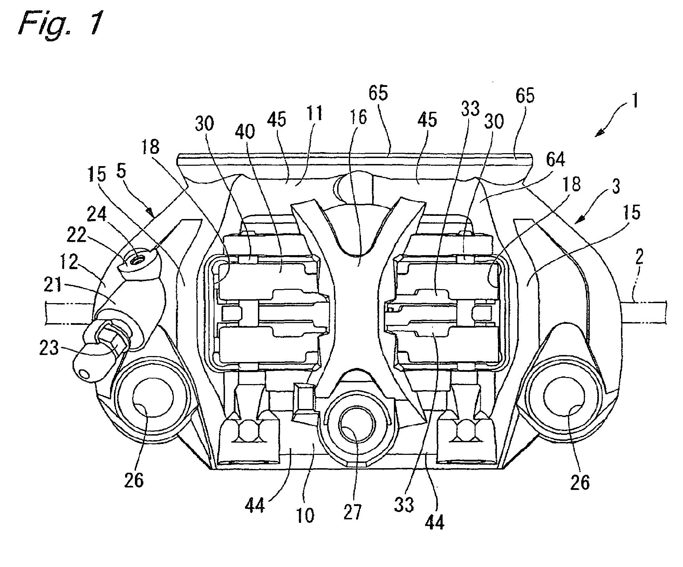

A first embodiment of the present invention will be described with reference to Figs. 1 to 5.

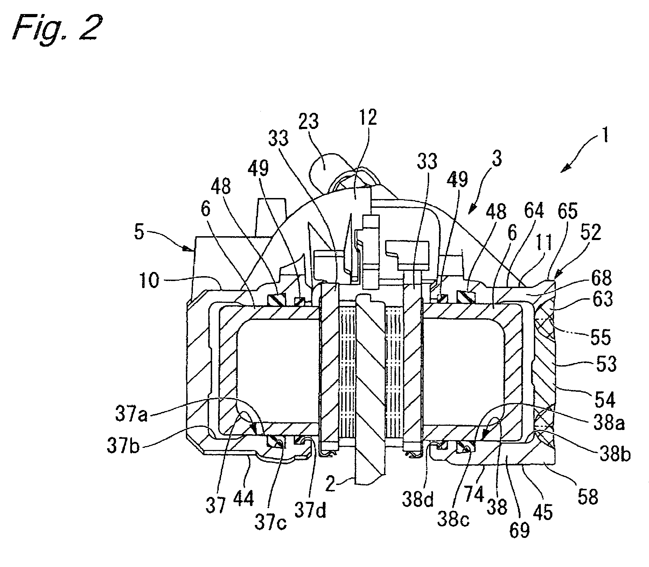

A disk brake 1 according to the first embodiment shown in Figs. 1 and 2 is a disk brake for braking a front wheel of a two-wheeled motor vehicle. The disk brake 1 includes a disk 2 rotatable with a wheel to which brake is applied, and a caliper 3 for exerting frictional resistance to the disk 2.

The caliper 3 includes a caliper body 5 attached to a non-rotatable portion (more specifically, a rear side of a front fork of the two wheeled vehicle) of the vehicle while extending over the disk 2. Further, as shown in Fig. 2, the caliper 3 includes a plurality of pairs of identically-shaped pistons 6, more specifically, two pairs of pistons 6. The respective pairs of pistons 6 are disposed at the caliper body 5 in a relationship spaced-apart by a predetermining spacing in the circumferential direction of the disk 2. The pistons 6 of each pair face each other with the disk 2 sandwiched therebetween. Therefore, the caliper 3 is an opposed piston type four pot caliper including two pairs of the pistons 6. In the following description, the disk brake 1 will be described based on an installed state thereof to the vehicle. The term "disk radial direction" is used to refer to the radial direction of the disk 2 in the installed state. The term "disk axial direction" is used to refer to the axial direction of the disk 2 in the installed state. The term "disk circumferential direction" is used to refer to the circumferential direction (rotational direction) of the disk 2 in the installed state.

The caliper body 5 includes a cylinder portion 10 formed into a shape elongated along the disk circumferential direction and disposed at a vehicle outer side (the opposite side from the wheel) of the disk 2, a cylinder portion 11 formed into a shape elongated along the disk circumferential direction and disposed at a vehicle inner side (the side near the wheel) of the disk 2, and a bridge portion 12 extending from the respective outer sides of the cylinder portions 10 and 11 in the disk radial direction to the outer circumferential side of the disk 2 so as to connect the cylinder portions 10 and 11 at the radially outer side of the disk 2, thereby integrally forming the caliper body 5.

As shown in Fig. 1, the bridge portion 12 is constituted by a pair of bridge constituting portions 15 disposed at the both sides of the disk circumferential direction, and a bridge constituting portion 16 disposed at an intermediate position between the portions 15 in the disk circumferential direction. As a result, the bridge portion 12 includes openings 18 respectively formed so as to penetrate in the disk radial direction at positions between the bridge constituting portion 15 at one side of the disk circumferential direction and the bridge constituting portion 16, and between the bridge constituting portion 15 at the other side of the disk circumferential direction and the bridge constituting portion 16.

A substantially cylindrical passage protrusion 21 is formed at the outer side of the disk radial direction of one bridge constituting portion 15 located at the upper side when the disk brake 1 is mounted on the vehicle, such that the protrusion 21 protrudes in a state oriented toward the outer side of the bridge constituting portion 15 in the disk circumferential direction, the vehicle outer side, and the outer side of the disk radial direction. A substantially cylindrical passage protrusion 22 is formed at the vehicle inner side of the passage protrusion 21, such that the protrusion 22 partially protrudes in a state oriented toward the outer side of the bridge constituting portion 15 in the disk circumferential direction, the vehicle inner side, and the outer side of the disk radial direction.

A not-shown communication passage is formed through the passage protrusion 21 so as to extend toward the cylinder portion 11, and a bleeder plug 23 for air bleeding is attached to the outer portion of this communication passage. A not-shown communication passage is formed through the passage protrusion 22 so as to extend toward the cylinder portion 10, and a spherical blocking plug 24 for sealing this communication passage is attached to the outer portion of this communication passage. These communication passages intersect inside the caliper body 5, and establish communication between the interior of the cylinder portion 10 and the interior of the cylinder portion 11.

A pair of mount holes 26 is penetratingly formed at the cylinder portion 10 of the vehicle outer side at the both sides of the cylinder portion 10 in the disk circumferential direction, so that they extend along the disk radial direction in parallel with a line passing through the center of the disk 2 and the center of the caliper body 5 in the disk circumferential direction. The caliper 3 is so-called a radial mount type caliper fixedly attached to the vehicle body side of the vehicle by not-shown attachment bolts inserted through the mount holes 26.

Further, a communication passage 27 is penetratingly formed at the cylinder portion 10 of the vehicle outer side at the central position of the cylinder portion 10 in the disk circumferential direction so as to extend in parallel with the mount holes 26. A not-shown brake hose is connected to the communication passage 27 for enabling a supply and discharge of brake fluid to and from the interior of the cylinder portion 10.

The caliper body 5 includes a plurality of pad pins 30, in particular, two pad pins 30 disposed so as to bridge between the cylinder portions 10 and 11 along the disk axial direction in a relationship spaced-apart in the disk circumferential direction. The pad pins 30 are disposed at the openings 18, respectively.

Further, a pair of brake pads 33 is disposed at each of the openings 18 of the caliper body 5. The brake pads of each pair are located on both of two axial surfaces of the disk 2 while being supported by the pad pins 30 so as to be movable in the disk axial direction. Therefore, a plurality of pairs of brake pads 33, in particular, two pairs of brake pads 33 are supported at the caliper 3 so as to be movable in the disk axial direction.

As shown in Fig. 2, two pairs of bores 37 and 38, each pair of which is open to the disk 2 sides and face each other in the disk axial direction to make a pair, are formed at the cylinder portions 10 and 11 of the caliper body 5 in a relationship spaced-apart in the disk circumferential direction. The pairs of bores 37 and 38 are formed at the positions of the caliper body 5 in the disk circumferential direction corresponding to the respective openings 18 shown in Fig. 1. As shown in Fig. 2, the bores 37 and 38 have a substantially identical shape, and the above-mentioned two pairs of identically shaped pistons 6 are slidably fittedly inserted in the two pairs of bores 37 and 38, respectively.

The pistons 6, which are respectively disposed in the bores 37 and 38 of the caliper body 5, slide and move toward the disk 2 in the bores 37 and 38 by fluid pressures introduced in the bores 37 and 38. Due to these movements, the brake pads 33 disposed between the pistons 6 and the disk 2 are respectively pushed by the pistons 6 and are pressed against the disk 2, thereby generating a braking force applied to the vehicle. As shown in Fig. 1, pad springs 40 are disposed at the outer sides of the brake pads 33 in the disk radial direction so as to push the brake pads 33.

At the cylinder portion 10 of the vehicle outer side, the portion where the bore 37 is formed define a cylinder 44 in which the piston 6 is inserted, and two cylinders 44 are formed at the cylinder portion 10 so as to be arranged side by side in the disk circumferential direction. Similarly, at the cylinder portion 11 of the vehicle inner side, the portion where the bore 38 is formed defines a cylinder 45 in which the piston 6 is inserted, and two cylinders 45 are formed at the cylinder portion 11 so as to be arranged side by side in the disk circumferential direction.

As a result, the caliper body 5 includes the plurality cylinders 44 arranged side by side in the disk circumferential direction at one face side of the disk 2, constituting the one cylinder portion 10. Further, the caliper body 5 includes the plurality of other cylinders 45 arranged side by side in the disk circumferential direction at the other face side of the disk 2, constituting the other cylinder portion 11. The opposed type caliper body is constituted by connecting the cylinder portions 10 and 11 by the bridge portion 12. In other words, the one cylinder portion 10 includes at least two of the cylinders 44 arranged side by side in the disk circumferential direction at the one side of the disk 2, and the other cylinder portion 11 includes at least two of the cylinders 45 arranged side by side in the disk circumferential direction at the other side of the disk 2.

The bores 37 and 38 include fitting inner diameter portions 37a and 38a, which have an identical shape and the pistons 6 are slidably fitted in the fitting inner diameter portions 37a and 38a; large-diameter inner diameter portions 37b and 38b, which are positioned nearer to the bottom portions 53 of the cylinders 44 and 45 than the fitting inner diameter portions 37a and 38a are to the bottoms 53 and have a diameter larger than that of the fitting inner diameter portions 37a and 38a. At substantially middle positions of the fitting inner diameter portions 37a and 38a in the axial directions, piston seal grooves 37c and 38c, which have a diameter larger than that of the fitting inner diameter portions 37a and 38a to hold piston seals 48, are formed; and piston seal grooves 37d and 38d, which have a diameter larger than that of the fitting inner diameter portions 37a and 38a to hold piston seals 49, are formed at the opposite sides of the piston seal grooves 37c and 38c from the bottom portions 53.

The piston 6 disposed in the bore 37 of the cylinder portion 10 of the vehicle outer side slides on the inner surface of the fitting inner diameter portion 37a and the inner surfaces of the piston seals 48 and 49 held in the piston seal grooves 37c and 37d. Similarly, the piston 6 disposed in the bore 38 of the cylinder portion 11 of the vehicle inner side slides on the inner surface of the fitting inner diameter portion 38a and inner surfaces of the piston seals 48 and 49 held in the piston seal grooves 38c and 38d.

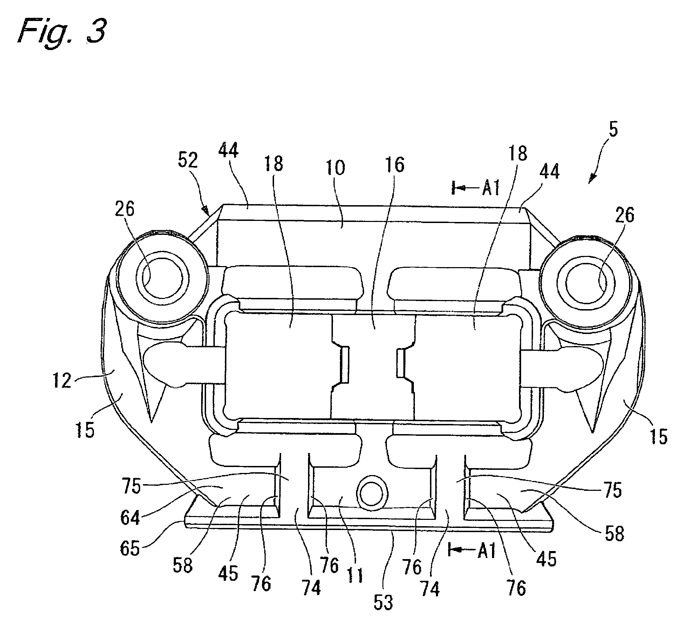

The caliper body 5 shown in Figs. 3 to 5 comprises an integrally-formed caliper body main part 52 which is a main constituent component of the caliper body 5, and cover members 54 which are welded to the caliper body main part 52 by friction stir welding to constitute bottom portions 53 of the cylinders 45.

That is, the above-mentioned caliper body main part 52 is prepared by, for example, forming the fitting inner diameter portions 37a and 38a, the large-diameter inner diameter portions 37b and 38b, the piston seal grooves 37c and 38c and the piston seal grooves 37d and 38d on the inner circumferential surfaces of the bores 37 and 38 at a material made of, for example, an aluminum alloy cast, which is integrally constituted by the above-mentioned cylinder portion 10, the cylinder portion 11 and the bridge portion 12 except for a part of the bottom portions 53 of the cylinders 45 of the cylinder portion 11 which is one of the cylinder portions 10 and 11.

The caliper body main part 52 includes openings 55 at the portion of the bottom portions 53 of the bores 38 of the cylinders 45. Therefore, the cylinders 45 each comprise a cylinder main body 58 having the opening 55 and partially constituting the caliper body main part 52, and the cover member 54 closing the opening 55 of the cylinder main body 58 to constitute the bottom portion 53 of the cylinder 45. In other word, the cylinders 45 each are constituted by the cover member 54 at the bottom portion 53, and the cylinder main body 58 having the opening 55 closed by the cover member 54 welded to the cylinder main body 58 by friction stir welding.

The cover member 54 is, for example, made from aluminum alloy and has a disk shape. The cover member 54 is sized such that the outer diameter thereof is slightly smaller than the opening 55, since the cover member 54 is supposed to be fitted into the opening 55 of the caliper body main part 52. The opening 55 of the caliper body main part 52 has a cylindrical shape which is straight and has a constant diameter in the axial direction thereof without, for example, a step on the inner circumferential surface thereof. Similarly, the cover member 54 has a cylindrical shape which has a straight outer circumferential surface. The opening 55 of the caliper body main part 52 is formed at the bottom portion 53 of the cylinder 45 so as to define a circle coaxial with the bores 38. The inner diameter of the opening 55 is sized to be smaller than the inner diameter of the fitting inner diameter portion 52a of the bore 38.

The opening 55 of the caliper body main part 52 is used as a processing tool insertion hole through which a tool is inserted to process the inner circumferential surfaces of the bores 37 and 38 after the caliper body main part 52 is cast. For example, the opening 55, after having been completed as the opening 55 or while still being a pilot hole of the opening 55 immediately after the casting, is used as a hole through which a tool is inserted at the time of forming, for example, the fitting inner diameter portions 37a and 38a, the large-diameter inner diameter portions 37b and 38b, the piston seal grooves 37c and 38c, and the piston seal grooves 37d and 38d on the inner circumferential surfaces of the bores 37 and 38 of the cylinder portions 10 and 11.

As mentioned above, after the cutting processing is performed to the inner circumferential surfaces of the bores 37 and 38, the openings 55 of the bores 38, and the like after the casting, welding the cover members 54 to the openings 55 of the cylinders 45 by friction stir welding is performed at the caliper body main part 52 so that the openings 55 are closed and the bottom portions 53 are generated.

More specifically, first, the cover members 54 are fitted into the openings 55 of the caliper body main part 53 so that the cover members 54 are supported from the bore 38 sides. From this state, friction stir welding is applied to the connection boundaries between the openings 55 of the cylinders 45 and the cover members 54 along the whole circumferences thereof by moving a rapidly rotating welding tool. Then, loop-like welding tracks 63 of the friction stir welding are generated along the boundaries between the cover members 54 and the caliper body main part 52, thereby integrating the cover members 54 and the caliper body main part 52.

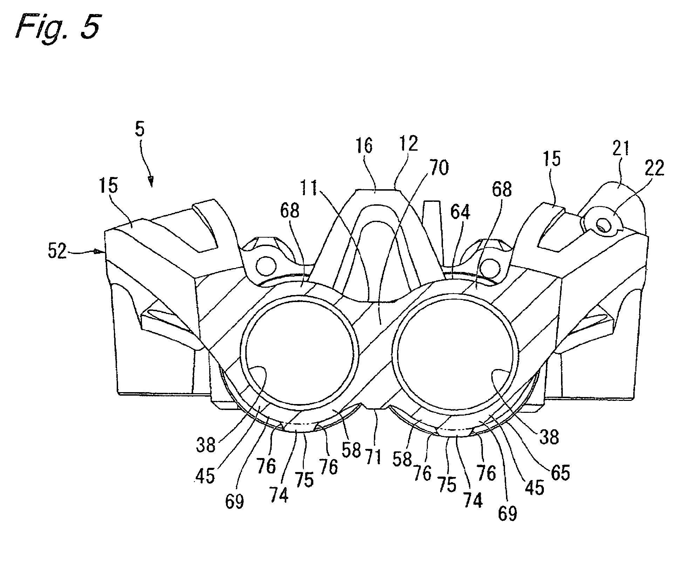

The bridge constituting portions 15 at the both sides of the disk circumferential direction are shaped in such a manner that, as the distance to the cylinder portion 11 of the vehicle inner side is reduced, the bridge constituting portions 15 become nearer to the center of the cylinder portion 11 in the disk circumferential direction as shown in Fig. 3 and become positioned at the inner side of the disk radial direction as shown in Fig. 5. The bridge constituting portions 15 are connected to the cylinder portion 11 of the vehicle inner side at the respective outer sides of the cylinders 45 in the disk radial direction and in the disk circumferential direction that are located at the both sides of the disk circumferential direction. Further, the bridge constituting portion 16 at the center of the caliper body 5 in the disk circumferential direction has a shape flaring in the disk circumferential direction and positioned nearer to the inner side of the disk radial direction, as the distance to the cylinder portion 11 of the vehicle inner side is reduced. The bridge constituting portion 16 is connected to a position between the two cylinders 45 in the disk circumferential direction at the outer sides of the cylinders 45 in the disk radial direction that are located at the both sides of the disk circumferential direction.

As shown in Fig. 3, the cylinder portion 11 of the vehicle inner side includes a protruding edge 65 formed along the substantially whole circumference at the end of the vehicle inner side in the disk axial direction so as to outwardly protrude beyond an intermediate portion 64 positioned at the inner side of the disk axial direction relative to the end of the vehicle inner side. That is, a thickness reduction is performed at the intermediate portion 64 at the inner side of the disk axial direction relative to the protrusion edge 65 of the cylinder portion 11, whereby the cylinder 11 is shaped in such a manner that the cylinder 11 has a constricted part at the intermediate portion 64 of the cylinder 11 in the disk axial direction.

As shown in Fig. 5, the intermediate portion 64 of the cylinder portion 11 includes cylinder main body constituting portions 68 having cylindrical shapes coaxial with the bores 38 to constitute the portions of the cylinder main bodies 58 at the outer sides of the disk radial direction, cylinder main body constituting portions 69 having cylindrical shapes coaxial with the bores 38 to constitute the portions of the cylinder main bodies 58 at the inner sides of the disk radial direction, and a central connection portion 70 connecting the cylinder main body constituting portions 68 of the outer side of the disk radial direction to each other, and connecting the cylinder constituting portions 69 of the inner side of the disk radial direction to each other. A protrusion 71 is formed at the inner side of the central connection portion 70 in the disk radial direction so as to protrude toward the inner side of the disk radial direction. The cylinder main body constituting portion 68 and the cylinder main body constituting portion 69 which constitute the same cylinder main body 58 have the same inner diameter and the same outer diameter.

At one side of the disk circumferential direction, the bridge constituting portion 15 is formed at a portion on the side of the cylinder main body constituting portion 68 and the cylinder main body constituting portion 69, which constitute the cylinder main body 58, opposite from the central connection portion 70. At the opposite side of the disk circumferential direction, the bridge constituting portion 15 is formed at the side of the cylinder main body constituting portion 68 and the cylinder main body constituting portion 69, which constitute the cylinder main body 58, opposite from the central connection portion 70. Therefore, the bridge constituting portions 15 at the both sides of the disk circumferential direction respectively extend from the cylinder main bodies 58 toward the outer sides of the disk circumferential direction, the outer sides of the disk radial direction, and the vehicle outer side.

In the first embodiment, the cylinder main bodies 58 at the both sides of the disk circumferential direction have ribs 74 respectively formed at the cylinder main body constituting portions 69 at the inner sides of the disk radial direction so as to be located on lines passing through the centers of the bores 38 and extending in parallel with the line passing through the center of the disk 2 and the center of the caliper body 5 in the disk circumferential direction. The ribs 74 are shaped to protrude toward the inner side of the disk radial direction and extend along the disk axial direction (the sliding direction of the piston 6). In other words, the ribs 74 are respectively formed at the cylinder main body constituting portions 69 of the cylinder main bodies 58 at the both sides so as to protrude toward the inner side of the disk radial direction and extend along the disk axial direction so that the distance between the centers of the ribs 74 of the cylinder main bodies 58 at the both sides in the disk circumferential direction is the same as the distance between the centers of the bores 38 of the cylinder main bodies 58 at the both sides. The ribs 74 are not limited thereto, and may be formed at slightly off-center positions, such as positions nearer the central connection portion 70 or positions farther away from the central connection portion 70 as long as they are positioned at the cylinder main body constituting portions 69 between the bridge constituting portions 15 of the cylinder main bodies 58 at the both sides and the central connection portion 70. Further, a plurality of ribs 74 may be formed at each of the cylinder main bodies 58.

The ribs 74 each share a common plane with the inner side of the protrusion edge 65 in the disk radial direction. The ribs 74 are each symmetrical in the disk circumferential direction with respect to the line passing through the center of the bore 38 and extending in parallel with the line passing through the center of the disk 2 and the center of the caliper body 5 in the circumferential direction. More specifically, each of the ribs 74 at the both sides includes a curved surface 75 positioned at the inner side of the disk radial direction and defining a surface of a cylinder coaxial with the cylinder main body constituting portion 69 and having a diameter larger than that of the cylinder main body constituting portion 69; and flat inclined surfaces 76 respectively connecting the both ends of the curved surface 75 in the disk circumferential direction and the outer circumferential surface of the cylinder main body constituting portion 69. The rib 74 has a proximal portion at the cylinder main body constituting portion 69 side, which is wider than the curved surface 75 at the tip side, thereby defining a tapered shape substantially isosceles trapezoidal in cross section.

In this way, due to the formation of the ribs 74, which protrude toward the inner side of the disk radial direction, at the inner sides of the cylinder main body constituting portions 69 in the disk radial direction that are located at the inner sides of the disk radial direction, the cylinder main bodies 58 have the inner sides of the disk radial direction thicker than the outer sides of the disk radial direction (thicker than the cylinder main body constituting portions 68). In other words, the ribs 74, which contribute to the thickness of the inner side of the disk radial direction thicker than the thickness of the outer side of the disk radial direction, are formed at the inner sides of the cylinder main bodies 58 in the disk radial direction. In still other words, the thickness of the inner sides of the cylinders 45 in the disk radial direction is a thickness of a portion between the connection portions of the bridge constituting portions 15, which extend over the disk 2 and are connected to the cylinders 45, and the central connection portion 70, which is a connection portion between the cylinders 45 arranged side by side in the disk circumferential direction; and the thickness of the inner sides of the cylinders 45 in the disk radial direction is constituted by the rib 74s which are formed from the connection portions of the bridge constituting portions 15 to the central connection portion 70, which is a connection portion between the cylinders 45, and extend along the sliding direction of the piston 6.

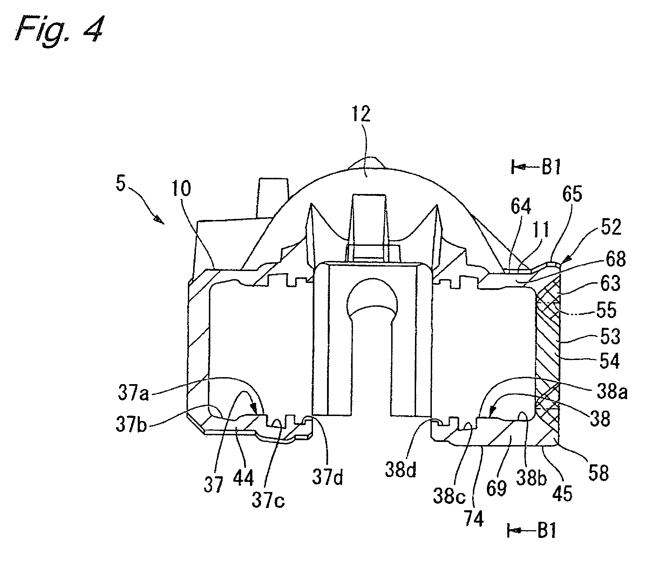

As shown in Fig. 4, the above-mentioned rib 74 extend, beyond the piston seal groove 38c which is one of the piston seal grooves 38c and 38d and is formed at the cylinder 45 nearer to the bottom portion 53, at the opposite side of the piston seal groove 38c from the bottom portion 53. As a result, the portion of the cylinder main body constituting portion 69 (the portion at the inner side of the cylinder main body 58 in the disk radial direction that is nearer to the bottom portion 53 of the disk axial direction than the piston seal groove 38c is to the bottom portion 53) has a greater thickness than the thickness of the portion of the cylinder main body constituting portion 68 (the portion at the outer side of the disk radial direction that is nearer to the bottom portion 53 of the disk axial direction than the piston seal groove 38c). In other words, as to the portion of the fitting inner diameter portion 38a of the cylinder main body 58 (that is nearer to the bottom portion 53 of the disk axial direction than the piston seal groove 38c to the bottom portion 53), the inner side of the disk radial direction has a greater thickness than the thickness of the outer side of the disk radial direction. Further, the thickness of the larger-diameter inner diameter portion 38b of the cylinder main body 58 is greater at the inner side of the disk radial direction than at the outer side of the disk radial direction. Further, since the portion of the fitting inner diameter portion 38a (that is nearer to the bottom portion 53 of the disk axial direction than the piston seal groove 38c is to the bottom portion 53) corresponds to the central portion of the cylinder 45 in the axial direction (the center of the axial length from the opening end of the bore 38 to the surface of the outer end of the bottom portion 53), the thickness of the portion from the center of the cylinder 45 in the axial direction to the bottom portion 53 of the disk axial direction is greater at the inner side of the disk radial direction than at the outer side of the disk radial direction.

When friction stir welding is applied as mentioned above, the temperature of friction stir welding is increased to approximately 80% of the melting point of a material to be welded (around 500 degrees for aluminum alloy), and the temperature of the portion in the vicinity is also increased accordingly. Then, since welding is performed by inserting a welding tool for friction stir welding to the work softened due to this temperature increase with a load of approximately 1 kN to 20 kN applied thereto, plastic deformation may occur in the vicinity of the welded portion, leading to deterioration of the welding quality. If a thickness reduction is performed along the circumference of the cylinder as in the above-mentioned Japanese Patent Application Public Disclosure No. 2007-225058 and the disk brake of the first embodiment of the present invention, plastic deformation may occur in the direction toward the radially outer side of the cylinder at the time of friction stir welding, and this shape deformation may result in deterioration of the welding quality. As a result, the welding quality is unstabilized. Especially, the outer side of the cylinder in the disk radial direction is reinforced by the bridge portion, while the inner side of the cylinder in the disk radial direction does not have such a reinforcement, and therefore is easy to be plastic-deformed at the time of friction stir welding, possibly leading to deformation of the inner circumferential surface of the cylinder in addition to deterioration of the welding quality. Such deformation of the inner circumferential surface of the cylinder may cause deterioration of the sliding performance of the piston which is supposed to slide inside the cylinder. As a result, the brake feeling may be compromised, and the piston may fail to move perpendicularly to the disk to thereby promote uneven wear of the friction pad.

On the other hand, in the first embodiment, at the cylinder main bodies 58 welded by friction stir welding, the thickness of the cylinder main body constituting portions 69 of the inner sides of the disk radial direction that are not reinforced by the bridge portion 12 is increased compared to the thickness of the cylinder main body constituting portions 68 of the outer sides of the disk radial direction that are reinforced by the bridge portion 12. Therefore, even the inner side of the disk radial direction that is not reinforced by the bridge portion 12 becomes more resistive to plastic deformation at the time of friction stir welding, and thereby it is possible to reduce the plastic deformation amount of the cylinder main body constituting portions 69 at the inner sides of the disk radial direction to the same level as the plastic deformation amount of the cylinder main body constituting portions 68 at the outer sides of the disk radial direction. As a result, the welding quality of friction stir welding can be stabilized. Further, the bores 37 and 38 can be prevented from being deformed, as a result which it is possible to improve the sliding performance of the pistons 6 which slide in the bores 37 and 38, and improve brake feeling. Further, since the bores 37 and 38 are prevented from being deformed, the pistons 6 can unfailingly move perpendicularly to the pad contact surface of the disk 2, whereby promotion of uneven wear of the brake pads 33 can be avoided.

Further, in the first embodiment, the portions of the cylinder main body constituting portions 69 at the inner sides of the disk radial direction that are nearer to the bottom portions 53 of the disk axial direction than the piston seal grooves 38c are to the bottom portions 53 have a greater thickness than the thickness of the portions of the cylinder main body constituting portions 68 at the outer side of the disk radial direction that are nearer to the bottom portions 53 of the axial direction than the piston seal grooves 38c are to the bottom portions 53. Therefore, it is possible to more effectively prevent deformation of the inner sides of the disk radial direction near the bottom portions 53 of the cylinders 45 where friction stir welding is applied, and to more securely stabilize the welding quality of friction stir welding.

Further, in the first embodiment, the central portions of the cylinder main body constituting portions 69 in the cylinder axial direction at the inner side of the disk radial direction have a greater thickness than the thickness of the central portions of the cylinder main body constituting portions 68 in the cylinder axial direction at the outer side of the disk radial direction. Therefore, it is possible to more effectively prevent deformation of the inner sides of the cylinders 45 in the disk radial direction, and to more securely stabilize the welding quality of friction stir welding.

Further, in the first embodiment, the cylinder main body constituting portions 69 at the inner sides of the cylinder main bodies 58 in the disk radial direction have the ribs 74 constituting the thickness thereof and formed along the sliding direction of the pistons 6. Therefore, it is possible to securely reinforce the inner side of the disk radial direction and effectively prevent deformation thereof to stabilize the welding quality of frictional stir welding while avoiding an increase in the weight without an unnecessary thickness increase

Further, in the first embodiment, the ribs 74 are formed at the cylinders 45 of the cylinder portion 11 of the vehicle inner side that cannot release heat to the vehicle body since it is not the vehicle body attachment side. Therefore, heat capacity around the cylinders 45 can be increased, and the surface area can be increased, whereby the heat release effect can be improved. Therefore, the heat distribution becomes even at the cylinders 45, and the accuracy of the cylinders 45 can be prevented from being deteriorated which might otherwise occur due to heat deformation of the caliper 3. Therefore, it is possible to obtain excellent brake feeling, even at the time of braking with a heavy load.

Further, in the first embodiment, the thickness of the inner side of the disk radial direction that is increased to be greater than the outer side of the disk radial direction is the thickness of the cylinder main body constituting portions 69 including the ribs 74 between the connection portions of the bridge constituting portions 15, which extend over the disk 2 and are connected to the cylinders 45, and the central connection portion 70, which is a connection portion between the cylinders 45. Therefore, it is possible to effectively prevent deformation of the inner side of the disk radial direction to stabilize the welding quality of friction stir welding while avoiding an increase in the weight.

### "SECOND EMBODIMENT"

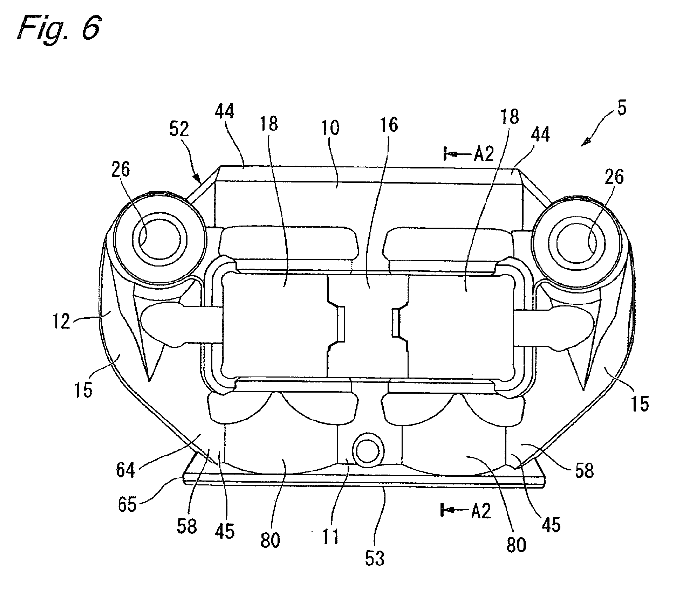

Next, a second embodiment will be described with main reference to Figs. 6 to 9, focusing on differences from the first embodiment. Like components will be identified by like names and denoted by like reference numerals as in the first embodiment.

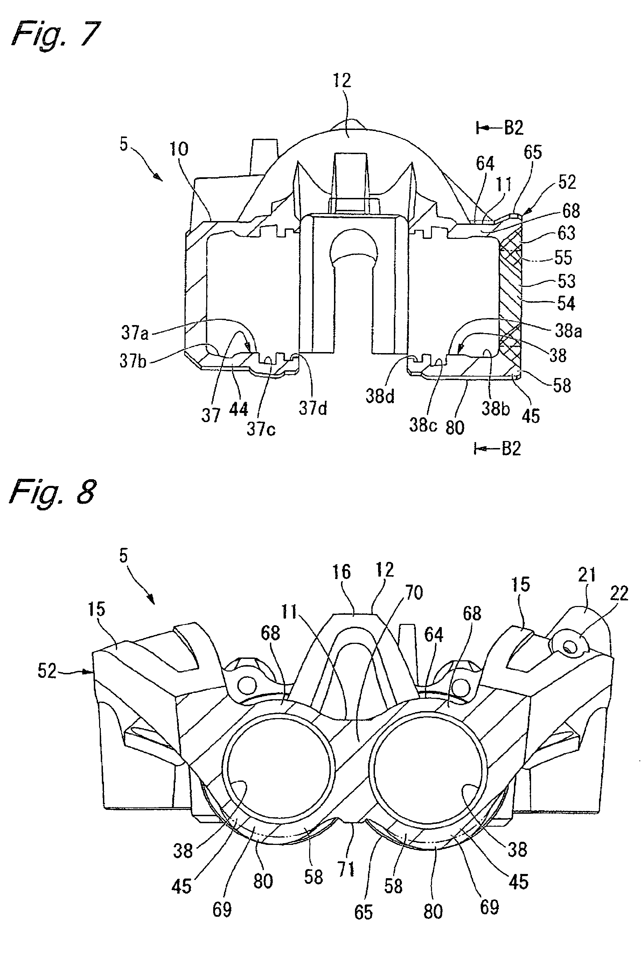

The second embodiment is different from the first embodiment in terms of the shape of the cylinder main bodies 58 at the both sides of the disk circumferential direction. More specifically, as shown in Figs. 6 and 8, in the second embodiment, thickness increased portions 80 each having a curved shape are formed at the inner sides of the cylinder main body constituting portions 69 in the disk radial direction which are located at the inner sides of the cylinder main bodies 58 in the disk radial direction. As shown in Figs. 6 and 7, the thickness increased portions 80 are formed to extend along the disk axial direction. The thickness increased portions 80 are gently curved from the portions of the cylinder main body constituting portions 69 near the central connection 70 to the portions of the cylinder main body constituting portions 69 near the bridge constituting portions 15, each defining an ellipsoidal arc, as viewed along the cylinder axial direction. Due to the thickness increased portions 80, the outer diameter of the central connection portion 70 sides of the cylinder main body constituting portions 69 is gradually increased as the distance to the central connection portion 70 is increased, and the outer diameter of the bridge constituting portion 15 sides of the cylinder main body constituting portions 69 is gradually increased as the distance to the bridge constituting portions 15 is increased.

The largest-diameter portions of the cylinder main body constituting portions 69 due to the thickness increased portions 80 are located at the centers of the thickness-increased portions 80, and located at the outer sides in the disk circumferential direction relative to the lines passing through the bores 38 and extending in parallel with the line passing through the center of the disk 2 and the center of the caliper body 5 in the disk circumferential direction. In other words, the thickness-increased portions 80 of the cylinder main body constituting portions 69 protrude from the cylinder main bodies 58 while being inclined in such directions that the thickness-increased portions 80 define acute angles relative to the line passing through the center of the disk 2 and the center of the caliper body 5 in the disk circumferential direction, as viewed from the disk axial direction. In still other words, the distance between the largest-diameter portions of the cylinder main body constituting portions 69 due to the thickness-increased portions 80 are longer than the distance of the centers of the bores 38 associated with the respective cylinder main body constituting portions 69.

In this way, the thickness-increased portions 80 are formed at the inner sides of the cylinder main body constituting portions 69 in the disk radial direction which are located at the inner side of the disk radial direction, so as to increase the diameters of the cylinder main body constituting portions 69 toward the inner sides of the disk radial direction. Therefore, the cylinder main bodies 58 are formed such that the thickness of the inner sides of the cylinder main bodies 58 in the disk radial direction become greater than those of the outer sides thereof in the disk radial direction (the thickness of the cylinder main body constituting portions 68). In other words, the inner sides of the cylinder main bodies 58 in the disk radial direction include the thickness-increased portions 80 that constitute the thickness of the inner side of the disk radial direction and are greater than the thickness of the outer side of the disk radial direction. In sill other words, the thickness of inner sides of the cylinders 45 in the disk radial direction is the thickness of the portions between the connection portions of the bridge portion 12, which extend over the disk 2 and is connected to the cylinders 45, to the central connection portion 70 which is a connection portion between the cylinders 45 arranged side by side in the disk circumferential direction, and are constituted by the thickness-increased portions 80 that are formed between the connection portions of the bridge portion 12 to the central connection portion 70, which is a connection portion between the cylinders 45, and extend along the sliding direction of the pistons 6. More specifically, 1.2 to 1.8 is set as the ratio of the thickness of the cylinder main body constituting portions 69 including the largest-diameter portions due to the thickness-increased portions 80 at the inner side of the disk radial direction, to the thickness of the cylinder main body constituting portions 68 at the outer sides of the cylinder main bodies 58 in the disk radial direction.

As shown in Fig. 7, the above-mentioned thickness-increased portions 80 extend beyond the piston seal grooves 38c at the opposite side of the piston seal grooves 38c, which are seal grooves nearer the bottom portions 53 out of the piston seal grooves 38c and 38d formed at the cylinders 45, from the bottom portions 53. As a result, the portion of the cylinder main body constituting portion 69 at the inner side of the cylinder main body 58 in the disk radial direction that is nearer to the bottom portion 53 of the disk axial direction than the piston seal groove 38c is to the bottom portion 53 has a greater thickness than the thickness of the portion of the cylinder main body constituting portion 68 at the outer side of the disk radial direction that is nearer to the bottom portion 53 of the disk axial direction than the piston seal groove 38c is to the bottom portion 53. In other words, as to the portion of the fitting inner diameter portion 38a of the cylinder main body 58 that is nearer to the bottom portion 53 of the disk axial direction than the piston seal groove 38c is to the bottom portion 53, the inner side of the disk radial direction has a greater thickness than the thickness of the outer side of the disk radial direction. Further, the thickness of the larger-diameter inner diameter portion 38b of the cylinder main body 58 is also greater at the inner side of the disk radial direction than at the outer side of the disk radial direction. Further, since the portion of the fitting inner diameter portion 38a of the cylinder main body 58 that is nearer to the bottom portion 53 of the disk axial direction than the piston seal groove 38c is to the bottom portion 53 corresponds to the central portion of the cylinder 45 in the axial direction, the thickness of the central portion of the cylinder 45 in the axial direction is greater at the inner side of the disk radial direction than at the outer side of the disk radial direction.

In the above-mentioned second embodiment, the thickness of the inner side of the disk radial direction that is sized to be greater than the thickness of the outer side of the disk radial direction is the thickness of the cylinder main body constituting portions 69 including the gently curved thickness-increased portion 80 extensively formed between the connection portions of the bridge constituting portions 15, which extend over the disk 2 and are connected to the cylinders 45, and the central connection portion 70 that is a connection portion between the cylinders 45. Therefore, it is possible to further effectively prevent deformation of the inner side of the disk radial direction that is not reinforced by the bridge portion 12, and to further securely stabilize the welding quality of friction stir welding.

Further, in the second embodiment, 1.2 to 1.8 is set as the ratio of the thickness of the cylinder main body constituting portions 69 including the thickness-increased portions 80 at the inner side of the disk radial direction, to the thickness of the cylinder main body constituting portions 68 of the outer sides of the cylinder main bodies 58 in the disk radial direction. Therefore, it is possible to effectively prevent plastic deformation of the inner side of the disk radial direction that is not reinforced by the bridge portion 12, which otherwise might occur at the time of friction stir welding, and to securely stabilize the welding quality of friction stir welding.

Assuming that thickness A represents the thickness of the cylinder main body constituting portions 68 at the outer side of the disk radial direction and thickness B represents the thickness of the cylinder main body constituting portions 69 including the thickness-increased portions 80 at the inner side of the disk radial direction, with use of a caliper of a disk brake made from an aluminum material (AC2A material) and having a total weight of 900 g, the thickness B was changed while the thickness A was under a constant condition (3.2 mm in consideration of the cylinder pressure capacity), and the thickness ratio B/A, the deformation of the thickness A after friction stir welding, the deformation of the thickness B after friction stir welding, the thickness increase amount which is an increase in the weight due to the increase in the thickness B were measured. The result is as shown in the following "table 1".

**Table 1**

| THICKNESS A | THICKNESS B | B/A | DEFORMATION OF A | DEFORMATION OF B | THICKNESS INCREASE AMOUNT |
|---|---|---|---|---|---|
| 3.2 | 3.2 | 1.00 | 0.33 | 0.48 | 0 |
| 3.2 | 3.84 | 1.20 | 0.33 | 0.41 | 1 |
| 3.2 | 4.65 | 1.45 | 0.33 | 0.35 | 4.3 |
| 3.2 | 5.76 | 1.80 | 0.33 | 0.29 | 9 |
| 3.2 | 6.72 | 2.10 | 0.33 | 0.26 | 12.7 |

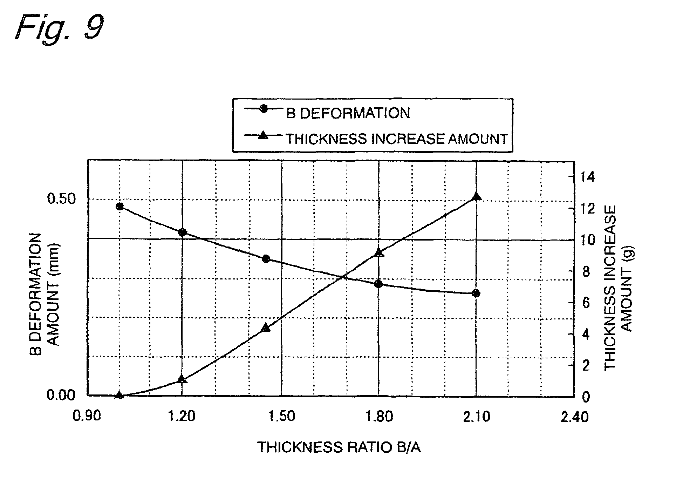

This result is shown in the characteristic line diagram of Fig. 9. In Fig. 9, the horizontal axis represents the thickness ratio B/A, and the vertical axis represents the deformation amount of the thickness B and the thickness increase amount. Desirably, the allowable amount for deformation of B is 0.41 mm or less for keeping the good welding quality and the excellent sliding performance of the pistons in the cylinders, and the allowable amount for the thickness increase amount is 9 g or less in consideration of the weight of the whole disk brake. Fig. 9 indicates that the thickness ratio B/A for satisfying these conditions is 1.2 to 1.8. That is, if the thickness ratio B/A is less than 1.2, the deformation of the thickness B after friction stir welding would exceed the deformation allowable amount 0.41 mm. In relation to the clearance between the cylinder and the piston, deformation of the thickness B exceeding the deformation allowable amount 0.41 mm is undesirable since it may cause plastic deformation generating an inward bulge at another portion of the cylinder portion to adversely affect the sliding movement of the piston. Further, if the thickness ratio B/A is larger than 1.8, the thickness increase amount exceeds the allowable amount 9 g. This means that the thickness increase amount exceeds 1% of 900 g that is the weight of the whole disk brake. A disk brake is mounted on the unsprung side of a vehicle, and a weight increase of 1% or more of a total weight may adversely affect the motion performance of the vehicle. In this way, the thickness increase amount exceeding the allowable amount 9 g is undesirable in consideration of the motion performance of the vehicle. The deformation amount of the thickness A is a constant value, 0.33 mm which is within the range of the allowable deformation amount.

Therefore, in case that the thickness A is kept at a constant value, and the thickness B is changed, the thickness ratio B/A 1.2 to 1.8 is effective for a disk brake to be manufactured by performing friction stir welding.

In this way, in the second embodiment, 1.2 to 1.8 is set as the ratio of the thickness of the inner side of the disk radial direction, to the thickness of the outer side of the disk radial direction. Therefore, while the increase in the weight of the disk brake is minimized, it is possible to prevent plastic deformation of the inner side of the disk radial direction that is easy to be deformed compared to the outer side of the disk radial direction at the time of friction stir welding, and to stabilize the welding quality of friction stir welding.

The above-mentioned first and second embodiments employ an opposed piston type four pot caliper. However, the present invention may be applied to another opposed type caliper such as a two pot caliper and six pot caliper, and may also be applied to a fist type caliper comprising opposed pistons at only one surface of the disk. Further, the same effects as mentioned above can be realized even at a disk brake (for example, a rim-on disk type) in which the bridge portion connecting the opposing cylinder portions is located at the inner side of the disk radial direction, by forming the above-mentioned ribs or thickness-increased portions at the outer sides of the cylinders in the disk radial direction.

According to the above-mentioned embodiments, in the disk brake, the brake pad is pressed against the disk by the piston caused to slide in the bore of the cylinder. The cylinder comprises the cover member at the bottom thereof, and the cylinder main body having the opening closed by the cover member welded thereto by friction stir welding. The thickness of the inner side of the cylinder main body in the disk radial direction is greater than the thickness of the outer side of the cylinder main body in the disk radial direction.

Therefore, it is possible to prevent plastic deformation at the time of friction stir welding for even the inner side of the disk radial direction that would otherwise be easy to be deformed compared to the outer side of the disk radial direction, and thereby possible to stabilize the welding quality of friction stir welding.

According to the above-mentioned embodiments, the thickness is at least the thickness of the portion from the piston seal groove formed at the cylinder to the bottom side of the axial direction.

Therefore, it is possible to more effectively prevent deformation of the inner side of the disk radial direction of the bottom side welded by friction stir welding, and possible to more securely stabilize the welding quality of friction stir welding.

According to the above-mentioned embodiments, the thickness is at least the thickness of the portion from the central portion of the cylinder in the axial direction to the bottom side of the axial direction.

Therefore, it is possible to effectively prevent deformation of the inner side of the cylinder in the disk radial direction, and possible to more securely stabilize the welding quality of friction stir welding.

According to the above-mentioned embodiments, the rib, which constitutes the thickness of the inner side of the disk radial direction, is formed at the inner side of the cylinder main body in the disk radial direction so as to extend along the sliding direction of the piston.

Therefore, it is possible to effectively prevent deformation of the inner side of the disk radial direction and to stabilize the welding quality of friction stir welding while avoiding an increase in the weight.

According to the above-mentioned embodiments, the cylinder comprises at least two cylinders arranged side by side in the circumferential direction of the disk. The thickness of the inner side of the disk radial direction is the thickness of the portion from the connection portion of the bridge portion extending over the disk and connected to the cylinder to the connection portion between the cylinders.

Therefore, it is possible to effectively prevent deformation of the inner side of the disk radial direction and to stabilize the welding quality of friction stir welding, even if the disk brake includes at least two cylinders arranged side by side in the disk circumferential direction.

According to the above-mentioned embodiments, the cylinder comprises at least two cylinders arranged side by side in the disk circumferential direction. The thickness of the inner side of the disk radial direction is the thickness of the portion from the connection portion of the bridge portion extending over the disk and connected to the cylinder to the connection portion between the cylinders. The thickness of the inner side of the disk radial direction is constituted by the rib formed from the connection portion of the bridge portion to the connection portion between the cylinders so as to extend along the sliding direction of the piston.

Therefore, it is possible to effectively prevent deformation of the inner side of the disk radial direction and to stabilize the welding quality of friction stir welding while avoiding an increase in the weight.

## Claims

1. A disk brake wherein:
a brake pad (33) is pressed against a disk (2) by a piston (6) caused to slide in a bore of a cylinder;
the cylinder comprises a cover member (54) at a bottom thereof, and a cylinder main body having an opening closed by the cover member (54) welded thereto by friction stir welding; **characterised in that**
a thickness of an inner side (69) of the cylinder main body in a disk radial direction is greater than a thickness of an outer side (68) of the cylinder main body in the disk radial direction.

2. The disk brake according to claim 1, wherein the thickness is at least a thickness of a portion that is nearer to the bottom of an axial direction than a piston seal groove (38c) formed at the cylinder is to the bottom.

3. The disk brake according to claim 2, wherein the thickness is at least a thickness of a portion from a central portion of the cylinder (44) in an axial direction to the bottom of the axial direction.

4. The disk brake according to any of claims 1 to 3, wherein:
the cylinder (44) comprises at least two cylinders arranged side by side in a circumferential direction of the disk; and
the thickness of the inner side of the disk radial direction is a thickness of a portion from a connection portion of a bridge portion extending over the disk and connected to the cylinder to a portion between the cylinders.

5. The disk brake according to any of claims 1 to 3, wherein:
the cylinder (44) comprises at least two cylinders the cylinder comprises at least two cylinders arranged so as to sandwich the disk therebetween; and
the thickness of the inner side of the disk radial direction is a thickness of a portion between a connection portion of a bridge portion extending over the disk and connecting the cylinders, and the most inner side of the cylinder in the disk radial direction.

6. The disk brake according to any of claims 1 to 3 further comprising a claw portion disposed at the opposite side from the cylinder with the disk (2) sandwiched therebetween,
wherein the thickness of the inner side of the disk radial direction is a thickness of a portion between a connection portion where a bridge portion extending over the disk and connecting the cylinder and the claw portion is connected to the cylinder, and the most inner side of the cylinder in the disk radial direction.

7. The disk brake according to any of claims 1 to 6, wherein a rib (74) is formed at the inner side of the cylinder main body in the disk radial direction, the rib (74) constituting the thickness of the inner side of the disk radial direction.

8. The disk brake according to claim 7, wherein the rib (74) is formed along a sliding direction of the piston.

9. The disk brake according to any of claims 1 to 8, wherein the thickness of the inner side (69) of the cylinder main body in the disk radial direction is formed to satisfy 1. 2 to 1.8 as a ratio thereof to the thickness of the outer side (68) of the cylinder main body in the disk radial direction.

## Patentansprüche

1. Scheibenbremse, bei der:
ein Bremsbelag (33) gegen eine Scheibe (2) mittels eines Kolbens (6) gedrückt wird, der dazu gebracht wird in einer Bohrung eines Zylinders zu gleiten;
wobei der Zylinder ein Abdeckungselement (54) an einem Boden davon und einen Zylinderhauptkörper, der eine Öffnung aufweist, die von dem Abdeckungselement (54) verschlossen wird, das daran mittels Reibrührschweißen geschweißt ist aufweist;
**dadurch gekennzeichnet, dass**
eine Dicke einer Innenseite (69) des Zylinderhauptkörpers in einer Scheibenradialrichtung größer ist als eine Dicke einer Außenseite (68) des Zylinderhauptkörpers in der Scheibenradialrichtung.

2. Scheibenbremse nach Anspruch 1, bei der die Dicke zumindest eine Dicke eines Abschnitts ist, der näher zu dem Boden in einer Axialrichtung als eine Kolbendichtungsnut (38c), die an dem Zylinder ausgebildet ist, zu dem Boden ist.

3. Scheibenbremse nach Anspruch 2, bei der die Dicke zumindest ein Dicke eines Abschnitts von einem zentralen Abschnitt des Zylinders (44) in einer Axialrichtung hin zu dem Boden der Axialrichtung ist.

4. Scheibenbremse nach einem der Ansprüche 1 bis 3, bei der:
der Zylinder (44) zumindest zwei Zylinder umfasst, die Seite an Seite in einer Umfangsrichtung der Scheibe angeordnet sind; und
wobei die Dicke der Innenseite der Scheibenradialrichtung eine Dicke eines Abschnitts von einem Verbindungsabschnitt eines Brückenabschnitts, der sich über die Scheibe erstreckt und mit dem Zylinder verbunden ist, hin zu einem Abschnitt zwischen den Zylindern ist.

5. Scheibenbremse nach einem der Ansprüche 1 bis 3, bei der:
der Zylinder (44) zumindest zwei Zylinder umfasst, die angeordnet sind um die Scheibe dazwischen einzuklemmen; und wobei eine Dicke der Innenseite der Scheibenradialrichtung eine Dicke eines Abschnitts zwischen einem
Verbindungsabschnitt eines Brückenabschnitts, der sich über die Scheibe erstreckt und die Zylinder verbindet, und der innersten Seite des Zylinders in der Scheibenradialrichtung ist.

6. Scheibenbremse nach einem der Ansprüche 1 bis 3, ferner umfassend einen Klauenabschnitt, der an der gegenüberliegenden Seite des Zylinders angeordnet ist, wobei die Scheibe (2) dazwischen eingeklemmt ist;
wobei die Dicke der Innenseite der Scheibenradialrichtung eine Dicke eines Abschnitts zwischen einem Verbindungsabschnitt, an dem ein Brückenabschnitt, der sich über die Scheibe erstreckt und den Zylinder und den Klauenabschnitt verbindet, mit dem Zylinder verbunden ist, und der innersten Seite des Zylinders in der Scheibenradialrichtung ist.

7. Scheibenbremse nach einem der Ansprüche 1 bis 6, bei der eine Rippe (74) an der Innenseite des Zylinderhauptkörpers in der Scheibenradialrichtung ausgebildet ist, wobei die Rippe (74) die Dicke der Innenseite der Scheibenradialrichtung ausbildet.

8. Scheibenbremse nach Anspruch 7, bei der die Rippe (74) entlang einer Gleitrichtung des Kolbens ausgebildet ist.

9. Scheibenbremse nach einem der Ansprüche 1 bis 8, bei der die Dicke der Innenseite (69) des Zylinderhauptkörpers in der Scheibenradialrichtung ausgebildet ist, um 1,2 bis 1,8 als einem Verhältnis davon zu der Dicke der Außenseite (68) des Zylinderhauptkörpers in der Scheibenradialrichtung zu genügen.

## Revendications

1. Frein à disque dans lequel :
une plaquette de frein (33) est pressée contre un disque (2) par un piston (6) amené à coulisser dans un alésage d'un cylindre ;
le cylindre comprend un élément formant couvercle (54) au niveau d'un fond de celui-ci, et un corps principal de cylindre ayant une ouverture fermée par l'élément formant couvercle (54) soudé à celui-ci par soudage par friction-malaxage ; **caractérisé en ce que** une épaisseur d'un côté intérieur (69) du corps principal de cylindre dans une direction radiale de disque est plus grande qu'une épaisseur d'un côté extérieur (68) du corps principal de cylindre dans la direction radiale de disque.

2. Frein à disque selon la revendication 1, dans lequel l'épaisseur est au moins une épaisseur d'une partie qui est plus proche du fond d'une direction axiale qu'une rainure de joint de piston (38c), formée au niveau du cylindre, ne l'est par rapport au fond.

3. Frein à disque selon la revendication 2, dans lequel l'épaisseur est au moins une épaisseur d'une partie allant d'une partie centrale du cylindre (44) dans une direction axiale jusqu'au fond de la direction axiale.

4. Frein à disque selon l'une quelconque des revendications 1 à 3, dans lequel :
le cylindre (44) comprend au moins deux cylindres agencés côte à côte dans une direction circonférentielle du disque ; et
l'épaisseur du côté intérieur de la direction radiale de disque est une épaisseur d'une partie allant d'une partie de connexion d'une partie formant pont s'étendant sur le disque et reliée au cylindre jusqu'à une partie entre les cylindres.

5. Frein à disque selon l'une quelconque des revendications 1 à 3, dans lequel :
le cylindre (44) comprend au moins deux cylindres agencés de façon à prendre en sandwich le disque entre ceux-ci ; et
l'épaisseur du côté intérieur de la direction radiale de disque est une épaisseur d'une partie entre une partie de connexion d'une partie formant pont s'étendant sur le disque et reliant les cylindres, et le côté le plus intérieur du cylindre dans la direction radiale de disque.

6. Frein à disque selon l'une quelconque des revendications 1 à 3 comprenant en outre une partie formant fourche disposée au niveau du côté opposé par rapport au cylindre, le disque (2) étant pris en sandwich entre celle-ci,
dans lequel l'épaisseur du côté intérieur de la direction radiale de disque est une épaisseur d'une partie entre une partie de connexion où une partie formant pont s'étendant sur le disque et reliant le cylindre et la partie formant fourche est reliée au cylindre, et le côté le plus intérieur du cylindre dans la direction radiale de disque.

7. Frein à disque selon l'une quelconque des revendications 1 à 6, dans lequel une nervure (74) est formée au niveau du côté intérieur du corps principal de cylindre dans la direction radiale de disque, la nervure (74) constituant l'épaisseur du côté intérieur de la direction radiale de disque.

8. Frein à disque selon la revendication 7, dans lequel la nervure (74) est formée le long d'une direction de coulissement du piston.

9. Frein à disque selon l'une quelconque des revendications 1 à 8, dans lequel l'épaisseur du côté intérieur (69) du corps principal de cylindre dans la direction radiale de disque est formée pour satisfaire à 1,2 à 1,8 en tant que rapport de celle-ci sur l'épaisseur du côté extérieur (68) du corps principal de cylindre dans la direction radiale de disque.
